(19) Europäisches Patentamt / European Patent Office / Office européen des brevets

(11) **EP 3 948 675 B1**

(12) **EUROPEAN PATENT SPECIFICATION**

(45) Date of publication and mention
of the grant of the patent:
**29.10.2025 Bulletin 2025/44**

(21) Application number: **20713058.4**

(22) Date of filing: **27.03.2020**

(51) International Patent Classification (IPC):
**G06N 3/049** *(2023.01)* **G06N 3/063** *(2023.01)*

(52) Cooperative Patent Classification (CPC):
**G06N 3/049; G06N 3/063**

(86) International application number:
**PCT/EP2020/058854**

(87) International publication number:
**WO 2020/193792 (01.10.2020 Gazette 2020/40)**

(54) **DATA PROCESSING NODE AND DATA PROCESSING ENGINE**

DATENVERARBEITUNGSKNOTEN UND DATENVERARBEITUNGS-ENGINE

N UD ET MOTEUR DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2019 EP 19305390**

(43) Date of publication of application:
**09.02.2022 Bulletin 2022/06**

(60) Divisional application:
**25171676.7 / 4 567 676**

(73) Proprietor: **Snap Inc.**
**Santa Monica, CA 90405 (US)**

(72) Inventor: **CHERSI, Fabian**
**75012 Paris (FR)**

(74) Representative: **V.O.**
**P.O. Box 87930**
**2508 DH Den Haag (NL)**

(56) References cited:
- **PAREDES-VALL FEDERICO ET AL: "Unsupervised Learning of a Hierarchical Spiking Neural Network for Optical Flow Estimation: From Events to Global Motion Perception", 28 July 2018 (2018-07-28), XP093179063, Retrieved from the Internet <URL:https://arxiv.org/pdf/1807.10936v1>**
- **RAST A D ET AL: "The Leaky Integrate-and-Fire neuron: A platform for synaptic model exploration on the SpiNNaker chip", NEURAL NETWORKS (IJCNN), THE 2010 INTERNATIONAL JOINT CONFERENCE ON, IEEE, PISCATAWAY, NJ, USA, 18 July 2010 (2010-07-18), pages 1 - 8, XP031771398, ISBN: 978-1-4244-6916-1**

**Description**

The present invention relates to a computational unit or node which may be used in a data processing engine, as well as the data processing engine itself.

BACKGROUND TO THE INVENTION

Artificial neural networks are networks of various units which are designed to mimic biological neural networks that constitute animal and human brains. For this reason, these units are often referred to as "neurons". Throughout this application, the terms "unit", "node" and "neuron" will be used interchangeably.

In an artificial neural network, units are interconnected by a network of connections, which may reach thousands per neuron, just as the neurons in biological neural networks are connected by synapses, axons and dendrites. Again, throughout this application, the terms "synapse", "connection" and "communication channels" (in this context) will be used interchangeably.

Neural networks are a powerful computational tool, largely due to their ability to "learn" how to perform certain tasks based on examples input to them. One field in which they are utilized with great success is computer vision, for this very reason. They are also very useful for solving different kinds of pattern recognition, function approximation, inference and artificial intelligence problems.

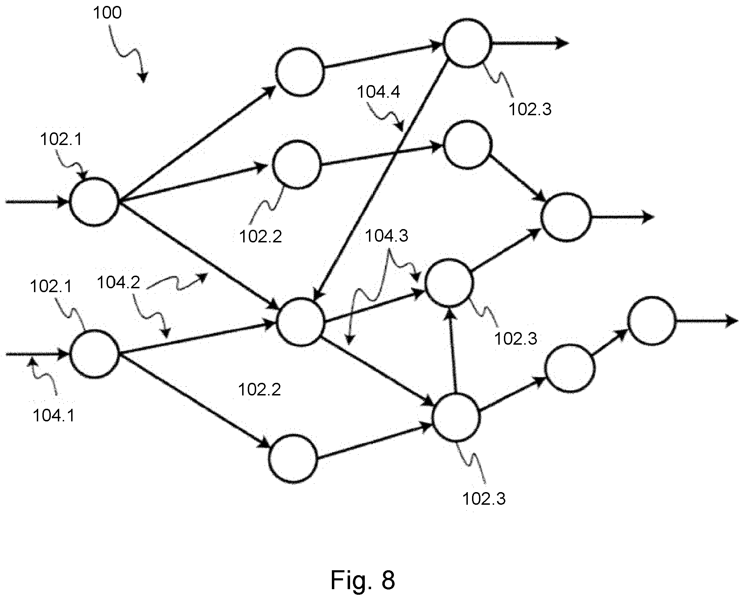

An example of an artificial neural network is shown in Fig. 8. This shows an artificial neural network 100 constituted of a plurality of nodes 102 which correspond to neurons in a biological neural network. Any given node 102 may be connected to many other nodes via connections 104, also referred to as communications channels or synaptic connections. The nodes providing inputs to any given node (e.g. node 102.2 of Fig. 8) are commonly referred to as "presynaptic nodes" (e.g. the nodes 102.1 of Fig. 8), while the node receiving the inputs (e.g. the node 102.2 of Fig. 8) is referred to as the "post-synaptic" node. Furthermore, the post-synaptic node of one layer (e.g. the node 102.2 of Fig. 8) can act as the presynaptic node for the subsequent upper layer of nodes (e.g. the nodes 102.3 in Fig. 8). To each of the node-to-node connections a connection efficacy is assigned, which in general refers to a magnitude and/or probability of input spike influence on post-synaptic neuronal responses (i.e. output generation or firing), and comprises a parameter termed "synaptic weight", by which the target state variable of the post-synaptic node is changed. In addition, another parameter indicates the duration or delay of neural transmission, the effect of which is to specify when the output of a presynaptic neuron will reach the post-synaptic neuron.

In traditional computer vision, scenes are observed using a regular or periodic acquisition which produces a collection of static images (frames). Frame-based computation is currently at the core of the whole field of artificial and computer vision. So far, most imaging technology that has been developed has been designed to acquire, operate on, and display frames. A major drawback of frame-based acquisition is that it acquires information in a way that is independent of the dynamics of the underlying scene. The temporal content of features has rarely been explored or tackled, mainly due to the three following underlying hypotheses on which machine vision is based:

(i) Scene illumination is measured at unnatural fixed time periods (frame-rate), resulting in acquisition of huge amounts of redundant data because many or most pixels will not change from one frame to the next. Massive redundancy in the acquired data is what allows video compression algorithms to achieve impressive compression ratios. This redundant data is non-optimally sampled, digitized, and transmitted, producing a waste of resources, before expending even more resources to implement compression. This process sets important speed and power limitations on obtaining visual information.

(ii) The lack of dynamic content and the acquisition at pre-defined sample frequencies impedes the detection of complex temporal information in the data.

(iii) The absolute pixel illumination is considered to be the main source of information. However, illumination is not an invariant property of a scene. For this reason, most of the current algorithms fail to operate in uncontrolled lighting conditions. The ability to accurately measure luminance is also limited by the low dynamic range of conventional cameras.

In the last decade the field of neuromorphic engineering has been developing event-driven time-based vision sensors which operate on a very different principle. Instead of capturing static images of the scene (i.e. frames), these sensors record pixel intensity variations with high temporal precision (typically 1 $\mu$s). This provides information about scene dynamics which can aid the recognition and increase pattern separability. These sensors have matured to a point where they are now commercially available and can be utilized with little effort.

Biomimetic event-driven time-based vision sensors (such as the ATIS (Posch et al., 2008), and the DVS (Lichtsteiner et al., 2008)) [1] are a class of vision devices that, like the biological retina, are driven by "events" happening within the visual scene. They are not like conventional vision sensors, which are driven by artificially created timing and control signals (e.g. frame clock) that have no relation to the source of the visual information. Over the past few years, a variety of these event-based devices has been developed including temporal contrast vision sensors that are sensitive to relative luminance change, gradient-based sensors sensitive to static edges, and optical-flow sensors. Most of these vision sensors output visual information about the scene in the form of asynchronous address events using the Address Event Representation (AER) protocol and encode the information in the spatial and temporal dimension simultaneously. Because of this encoding scheme, conventional machine vision algorithms cannot be directly applied.

[1] Lichtsteiner P., Posch C., and Delbruck T. (2008) A 128x128 120 db 15 $\mu$s latency asynchronous temporal contrast vision sensor. IEEE journal of solid-state circuits, 43(2):566-576.

Contrary to classical visual sensors, where only space is represented, in this new type of sensor, time is also taken into account. A stream of visual events can be mathematically defined as:

$$e_n = [x_n, y_n, t_n, p_n]$$

where n $\in$ $N$

Here, $e_n$ is the $n^{th}$ event and consists of a location $(x_n, y_n)$, a time $t_n$, and a "polarity" $p_n$, with $p_n \in \{-1, 1\}$ in the case of event-based vision sensors, where +1 and -1 represent luminosity increase and decrease events respectively. In general $p_n$ is an integer index also called "channel" or "feature", and can have an arbitrary number of values.

There are two types of architectures which are commonly implemented: *spiking neural networks* (SNNs, typically used in low power architectures) and *continuous-valued neural networks* (such as conventional deep learning networks).

The first type of networks employ a pulse-coded mechanism (i.e. spikes) to encode information. This is exemplified for example in the works of Hodgkin and Huxley (1952), Gütig and Sompolinsky (2006)[2], and Lagorce and Benosman (2015)[3] WO 2017/009543, which are different types of spiking neural networks. In addition to neurons and synapses, SNNs also include another important factor: time. Much like neurons in the human body, nodes in a SNN only "fire" (i.e. emit a signal) when a threshold value is reached. This is equivalent to a membrane potential of a neuron exceeding a certain value, causing a nervous impulse to be produced and transmitted. In the human and animal brain, spikes typically last between 2 and 3 ms, but in artificial systems this time can be made much smaller, on the order of a single cycle of the computer's clock signal.

[2] Gütig R., Sompolinsky H. (2006). "The tempotron: a neuron that learns spike timing-based decisions". Nature Neuroscience 9(3):420-428.

[3] Lagorge X., Benosman R. (2015). "STICK: Spike Time Interval Computational Kernel, a framework for general purpose computing using neurons, precise timing, delays, and synchrony". Neural Computation 27, 2261-2317.

In WO 2017/009543, a neural network is described in which a value is encoded by the time difference between two "spikes", i.e. signals arriving at a given node. It is important to note that in such networks, all spikes or signals have a constant amplitude or value equal to 1. Despite this, it is possible to encode any value using the time interval between two signals. Moreover, as is shown in WO 2017/009543, it is possible to perform relatively complicated calculations, such as exponentiation, differentiation and integration, by constructing an appropriate arrangement of nodes and connections (i.e. neurons and synapses). Despite its apparent simplicity, it is possible to show that neural networks formed as in WO 2017/009543 are Turing complete. That is, they can be used to simulate any computer algorithm.

However, the arrangement of WO 2017/009543 is not without its disadvantages. Because it is only possible to encode values in the intervals between two spikes, the speed of the system is eventually limited by the necessary delays to encode certain values. In addition to this, due to the limitations of the individual neurons making up the network, the arrangements required to perform relatively simply calculations such as the four basic mathematical operations (addition, subtraction, multiplication and division) can become very complex. The present invention aims to address these problems.

Continuous-valued neural networks, such as is described in Rosenblatt (1957)[4] are not designed to work natively with time-encoded signals arriving from event-based sensors. In this case, dedicated data pre-processors have to be developed to convert data into a usable formal for these neural networks.

[4] Rosenblatt F. (1957). "The Perceptron: a perceiving and recognizing automaton". Report 85-460-1, Cornell Aeronautical Laboratory.

RAST A D ET AL: "The Leaky Integrate-and-Fire neuron: A platform for synaptic model exploration on the SpiNNaker chip",NEURAL NETWORKS (IJCNN), THE 2010 INTERNATIONAL JOINT CONFERENCE ON, IEEE, PISCATAWAY, NJ, USA, 18 July 2010 (2010-07-18), pages 1-8,ISBN: 978-1-4244-6916-1. discloses a spiking neural network implemented on a SpiNNaker chip.

Paredes-Vall Federico ET AL: "Unsupervised Learning of a Hierarchical Spiking Neural Network for Optical Flow Estimation: From Events to Global Motion Perception", 28 July 2018 (2018-07-28), discloses a spiking neural network processing signals from a neuromorphic camera.

EP 3 948 675 B1

## SUMMARY OF THE INVENTION

The invention is defined in the appended claims.

The present invention aims to address the above problems in the provision of a node which may be used in a data processing engine, from which output signals having variable values may be sent. Such nodes may also be able to perform simple mathematical operations without the need for the complex networks shown in WO 2017/009543. The inventor appreciates the inherent trade-off between the simplicity of the individual nodes and the simplicity of the overall network, but has found that data processing engines according to the present invention show marked improvements from systems such as shown in WO 2017/009543, particularly in terms of computing speed, power consumption and network traffic. Implementations on a field programmable gate array device (FPGA) show that the speed may increase up to 100,000-fold.

A first aspect of the invention achieves this in the provision of a processing node for use in a data processing engine, the node having an input connection and an output connection, wherein: the node has an associated first internal value (which may be referred to as a "potential value" or a "membrane potential", analogously with terms used to describe biological neurons); the node is configured to receive an input signal from the input connection, the input signal containing an input value; the node is configured to vary the first internal value in response to the input signal; and when the a triggering condition is met, the node is configured to emit an output signal containing an output value, to the output connection, the output value being based on the first internal value. Such a processing node displays advantages against the individual nodes as shown in the prior art in that the output value is not a constant - the output value, rather, is based on the first internal value associated with the node. In other words, the output value is variable, or non-constant. In this way, values can be encoded into the signals themselves; there is no need to rely on a delay between two signals in order to encode a given value. Nevertheless, the possibility of inter-spike interval encoding still exists. The output value may be encoded in the amplitude of the output signal. Similarly, the input value may be encoded in the amplitude of the input signal. So, straight away, we see that one of the major limitations of the systems of WO 2017/009543 has been overcome.

Here, and throughout the application, the terms "a", "an" or "the" should be understood to refer either one thing or a plurality of those things, i.e. they should be understood to mean "one or more", or "at least one".

In some embodiments of the invention, the output value may be based on a function of the first internal value, or the result of a calculation involving the first internal value. The output value may be a function, or based on a function of the first internal value and the input value.

So, not only does the present invention enable variable output values, but the nodes are also configured to perform calculations in order to generate an output value. In this way, it is possible to further simplify a given network which is required to perform an operation, as values may be encoded within the signals, and calculations may be made at the level of the nodes. Alternatively, in other embodiments, the output value may be equal to the first internal value.

In addition to the first internal value, the processing node may also have an associated second internal value (which may be referred to as a "current value" or "synaptic current" analogously to with terms used to describe biological neurons). It should be noted that the first and second internal values represent internal state variables of the processing node. The first internal value and the second internal value may be reflective of some property of the node. We will discuss later on how these values may be considered analogous to various physical principles, in particular those associated with a biological neuron. In such cases, the output value may be based on both the first internal value and the second internal value. This is in contrast with some known systems, in which the output value is constant regardless of the properties of the node at a given time, such as spiking neural networks or the system of WO 2017/009543. The output value may be based on the result of a calculation involving the first internal value and the second internal value. For example, the output value may be based on the product of the first internal value and the second internal value. Alternatively, the output value may be based on the first internal value divided by the second internal value, or *vice versa*. Here, and throughout this application, when we specify that the output value is "based on" or computed from a given value, it should be understood that this covers the scenario where the output value is that value, and also cases where the output value is a simple transformation of that value (such as multiplied by value, or with a value added). This possibility, that the output value can be based on the result of a calculation involving two values which may reflect properties of the node, enables a great reduction in the complexity of neural networks which can perform various functions, with no reduction in computational processing ability, efficiency, or speed. All values in the present invention may be encoded as any amount of bits, for example 4 bit, 8 bit or 16 bit binary numbers, providing several orders of magnitude more flexibility of values than in the spiking neural network of WO 2017/009543. There is not intrinsic reason why other coding schemes, including floating-point and fixed-point decimal representations, could not be used.

Data processing engines including nodes according to the first aspect of the present invention also benefit from enhanced configurability, enabled as a result of the breadth of functions which each node is able to perform, e.g. in contrast to known devices or architectures. In preferred embodiments of the present invention, a given node is in principle able to perform a variety of operations, but is programmable, e.g. by a user or a manufacturer, to perform one of these. It is this flexibility which provides the user with the enhanced configurability. Specifically, the node is preferably programmable to select an output value from: the first internal value, the second internal value, the product of the first internal value and the second internal value, the first internal value divided by the second internal value, the second internal value divided by the first internal value, and a constant. It should be understood here that these are a set of options which are in-built into the node, effectively to offer a user a choice which can then be programmed into the device. In other words, the node may be configured to perform any (i.e. all) of these functionalities, but a user may program the device to select which is used in each node in a data processing engine in which the processing node is used.

A feature of the processing node of the present application which is especially pertinent to its neural network functionality is the triggering condition. In some embodiments, the triggering condition may be the first internal value reaching or exceeding a predetermined threshold. In this sense, the first internal value may be considered as a "membrane potential" value, which gives rise to "firing" when a certain threshold is reached. In other embodiments, the triggering condition may be that the input signal includes, as well as the input value, a trigger signal, which causes the processing node to emit an output signal regardless of the first internal value at that time.

Again, in line with biological neurons, in some embodiments of the present invention, the node may be configured to reset the first internal value to zero when it has emitted an output signal, or when it receives a reset signal.

Before discussing more details of the operation of the node, we now consider the nature of the connections. In describing the node, we have discussed the input connection and the output connection. The below comments apply equally well to either, and may apply to all connections in a data processing engine. The description below refers to "a connection", but it should be understood that this may apply to the input connection, the output connection or any connection within a data processing engine.

A connection is configured to receive, at a proximal end, an output signal containing an output value from a node (referred to as an "emitter node" or "origin node"). As discussed, this output signal may be e.g. the product of the first internal value and the second internal value of the node at a given time, or may be a constant, etc. Each connection preferably also has an associated "weight" or "synaptic efficiency". At a distal end, a connection is configured to deliver an input signal containing an input value to a first connection point or second connection point of another node (the "receiver node" or "target node"). In preferred embodiments of the present invention, the input value which is delivered to the receiver node is based on a product of the output value and the weight of the connection. Here, the weight is a property of the connection itself, and does not vary based on the output value which is received at the proximal end of the connection. The output value, in contrast, is variable based on the properties (i.e. the first internal value and the second internal value) of the emitter node, and thus the input value which is delivered to the receiver node is variable.

In some embodiments, the processing node is preferably configured to vary the first internal value or the second internal value based on the input value received from the input connection. As discussed earlier, the first internal value may be considered a "potential value". In such cases, the input connection may be a potential-varying connection. Then, when an input signal is received from the potential-varying connection, the node is configured to vary the potential value based on the input value of the input signal received from the potential-varying connection.

This feature provides more detail on the means by which the processing node is able to vary the value of the first, or potential value based on the input signal. In some embodiments, the node is configured to increase the potential value by the input value of the input signal received from the potential-varying connection. In other words, the input value of the input signal received at the potential-varying connection represents a value which is added to (or subtracted from) the potential value. From this, it will be appreciated that several successive input signals gradually increase the potential value until it reaches the predetermined threshold, at which point an output signal may be emitted, and the potential value reset to zero. This process is analogous to the "integrate and fire" behaviour typical of (analogue) biological neurons.

In some embodiments, the processing node is configured to reset the second internal value to zero when it has emitted an output signal, or received a reset signal.

In the above discussion, the first internal value has been likened to a potential value. In some embodiments, the potential value may not be a constant. For example, in some embodiments, the potential value may vary with time, for example by decaying at an exponential or linear rate. In some embodiments, the node may be configured to vary the potential value, preferably based on the current-modulating value.

The second internal value may be considered analogous to a bias or current value, where "current" is used here in the sense of a flow of charge. Throughout this application, the term "current" is used, but it should be noted that the term may be used entirely interchangeably with the term "bias". The input connection may be a current-modulating connection. Then, when an input signal is received from the current-modulating connection, the node may be configured to vary the current value based on the input value of the input signal received from the current-modulating connection. In addition, the node is preferably configured to vary the potential value at a rate which is based on current value, and preferably at a rate which is proportional to the current value. In some embodiments, the current value may also vary with time, e.g. by decaying at a linear or exponential rate.

In some embodiments, the current value of a given processing node and the potential value of the same processing node obey the following relationship:

$$V(t+\Delta t) = V(t) + in_V(t) + r \cdot G(t)$$

$$G(t+\Delta t) = G(t) + in_G(t)$$

Where t represents the time and $\Delta t$ represents the time-step, V represents the first internal value or membrane potential, G represents the second interval value or the "current" or "bias" value, and r is a parameter that determines the amount of the contribution of G to V and ideally has the dimentions of a resistance. In some embodiments this value may be set to 0. Thus, the current or current value G may be considered to represent a gradient value, with which the potential value varies with time. $in_V(t)$ and $in_G(t)$ indicate the inputs to the potential and current values respectively.

A given input signal can thus influence either the potential value (first internal value) or current value (second internal value) of a processing node. In preferred embodiments, as is often the case with neural networks, the input signal and the output signals are in the form of a packet of data. Preferably, the packet contains no indication about the origin of the signal. For example, the packet may encode only the input value, and no other information. In order for the processing node to "know" how to treat a given input signal, i.e. whether it should influence the potential value or the current value, the processing node preferably includes a first connection point and a second connection point, wherein: when an input signal is received at the first connection point, the processing node is configured to treat that input signal as a potential-varying connection, and when an input signal is received at the second connection point, the processing node is configured to treat that input signal as a current-modulating connection.

In this way, when an input signal is received at the first connection point from a potential varying-connection, the processing node varies the potential as discussed above. And, when an input signal is received at the second connection point from a current-carrying connection, the processing node varies the current as discussed above. The first connection point is preferably configured to receive a plurality of input signals. The second connection point is preferably configured to receive a plurality of input signals.

It is then interesting to consider the effect of several input signals arriving at a given connection point. For example, the first connection point may be configured to receive a first input signal, containing a first input value and a second input signal, containing a second input value.

In some embodiments, when the first input signal and the second input signal are received at the first connection point, the node may be configured to vary the potential value based on the first input value and the second input value. For example, the node may be configured to vary the potential value by an amount which is based on the sum of the first input value and the second input value, or specifically, the node may be configured to vary the potential value by an amount which is equal to the sum of the first input value or the second input value. As will be described later on, with reference to the drawings, this feature can be used to implement a simple addition or subtraction machine.

In other embodiments, when the first input signal is received at the first connection point, the node is configured to vary the potential value based on the first input value; and when the second input signal is received at the first connection point, the node is configured further to vary the potential value based on the second input value. This feature accounts for the scenario in which the first input signal and the second input signal are not received simultaneously, as is often the case for networks based on spiking neural networks, in which time is a key factor.

The same features apply equally well in the case of current variation. Specifically, in some embodiments, when the first input signal and the second input signal are received at the second connection point, the node may be configured to vary the current value based on the first input value and the second input value. For example, the node may be configured to vary the current value by an amount which is based on the sum of the first input value and the second input value, or specifically, the node may be configured to vary the current value by an amount which is equal to the sum of the first input value or the second input value. Similarly, in other embodiments, when the first input signal is received at the second connection point, the node is configured to vary the current value based on the first input value; and when the second input signal is received at the second connection point, the node is configured further to vary the current value based on the second input value.

We have mentioned briefly the important feature of spiking neural networks whereby time is taken into account. For example, in some embodiments, the processing node may be configured to operate with a propagation delay. The delay may be a property of the connection (i.e. the input connection or the output connection). It will be explained here with reference to the input connection but it will be appreciated that the explanation applies equivalently to the output connection. The input connection may have an associated delay parameter. As with the weight, the delay parameter is a property of the connection itself, and is independent of the signal which is being conveyed by the connection. In such embodiments, when an input signal is received from the input connection, the processing node is preferably configured to vary the first internal value or the second internal value after a predetermined amount of time has elapsed, wherein the predetermined amount of time is based on the delay parameter.

The use of processing nodes according to the first aspect of the invention in data processing engines can lead to vast improvements in performance compared to known data processing engines, for the reasons explained above. With this in mind, a second aspect of the present invention provides a data processing engine including at least one processing node of the first aspect of the invention. More specifically, a data processing engine may include a plurality of processing nodes and connections between the nodes, wherein at least a subset of the processing nodes are processing nodes according to the first aspect of the invention. The subset may include at least 50% of the plurality of processing nodes, more preferably may include at least 75% of the plurality of processing nodes, still more preferably may include at least 90% of the plurality of processing nodes, still more preferably may include at least 95% of the processing nodes, and most preferably may include at least 99% of the processing nodes. In some embodiments, each of the plurality of processing nodes is a processing node according to the first aspect of the invention. In some embodiments, the second aspect of the invention may provide a data processing engine including an artificial neural network, the artificial neural network including the plurality of processing nodes and connections between the nodes. The make-up of the plurality of processing nodes may be as described earlier in this paragraph. Data processing engines made up of a plurality of processing nodes in this way are capable of massively parallel operation, meaning that in contrast to regular, or "traditional" computing or Von Neumann machines, several processes can be performed at once, without the need to rely on a chain or sequence of actions. This greatly improves the processing power of such data processing engines, allowing a level of parallelism that ranges from hundreds to tens of thousands of parallel operations.

Data processing engines according to the second embodiment of the invention may be particularly useful for the processing of event-based signals, that is, signals that are only produced when an event occurs, rather than successive processing of frames of data, much of which remains largely unchanged from one frame to the successive one. Accordingly, the data processing engine may be configured to receive event-based data, for example from a sensor. In some embodiments, the data processing engine may be configured to receive event-based data from one or more of the following: a camera, an audio recording device, a device configured to monitor physiological data, a device configured to monitor or reflect financial data, or a device configured to monitor sensors in a smart home. Furthermore, the data processing engine of the second aspect of the invention may also be used to process analogue, or continuous data. In order to do so the data processing engine preferably includes a sampling module configured to sample the incoming continuous data in order to convert it into a series of spikes, each having a value, represented by their amplitude, which spikes form the input signals to the processing nodes. For example, the sampling module may be configured to sample the incoming continuous data at regular intervals.

Data processing engines according to embodiments of the second aspect of the present invention include a plurality of data processing nodes. The processing nodes may be arranged two-dimensionally. Here, "two-dimensionally" can mean either that the processing nodes are arranged two-dimensionally in space, or alternatively that they can be identified using two coordinates, which may be referred to as an x-coordinate, and y-coordinate. It should be stressed, however, that these do not necessarily represent horizontal and vertical spatial coordinates. In other embodiments of the invention, the processing nodes may be arranged in three or more dimensions. Event-based signals received from an external device preferably include information identifying the processing node in the data processing engine to which the event-based data should be transmitted or forwarded. In some embodiments, the event-based signals may include the coordinates identifying the processing node. This may be the case, for example, if there is a one-to-one relationship between sensors in the internal device and processing nodes in the data processing engine. In some cases, however, this is not suitable. If the event-based sensor is in the form of a camera, for example, more than one pixels may be mapped to any given processing node. Accordingly, the data processing engine may include a lookup module (e.g. in the form of a memory storing a lookup table), the lookup module being configured to identify a processing node of the plurality of processing nodes based on information received from the event-based sensor. In other embodiments, the lookup module may identify the processing node of the plurality of processing nodes based on a calculation or function.

In embodiments in which the event-based sensor is in the form of a camera, it may be configured to provide the event-based data in the form of "events" having the form:

$$e_n = [x_n, y_n, t_n, p_n]$$

where $n \in N$

Here, $x_n$ and $y_n$ represent the location of e.g. pixels in an array, $t_n$ is a timestamp, and $p_n$ is $\pm 1$, depending on whether there is an increase or decrease in luminosity of the pixel in question. In such embodiments, all of the data is preferably sent to first input connections, so that it gives rise to a change in the potential or first internal value of the processing nodes.

A third aspect of the present invention also provides a data processing method using a data processing node, for example a data processing node according to the first aspect of the invention. The data processing method includes the steps of: receiving, at a processing node, an input signal containing an input value; varying a first internal value of the processing node in response to the input signal; and when a triggering condition is met, emitting an output signal containing an output value, the output value being based on the first internal value. It should be noted that all of the optional features set out above with reference to the operation of the first aspect of the invention, apply equally well (either alone or in combination) to the method of the present aspect of the invention, to the extent that they are compatible therewith. However, for completeness, we set out explicitly some of the important ones below. The method of the present aspect of the invention displays all of the same advantages as the previous aspects of the invention.

The method may further include, before emitting the output signal, the step of performing a calculating an output value, preferably based on the first internal value. Alternatively, the output value may be equal to the first internal value.

The processing node may have an associated second internal value, as well as the first internal value. In such cases, the output value may be based on both the first internal value and the second internal value. In such cases, the step of calculating an output value may be based on the first internal value and the second internal value. For example, the step of calculating an output value may include one or more of: multiplying the first internal value by the second internal value; dividing the first internal value by the second internal value; dividing the second internal value by the first internal value. All values in the present invention may be encoded in an appropriate number of bits, in either floating-point, fixed-point or integer format.

In preferred embodiments of the method, the output value may take a plurality of different values. The method may further include a step of programming the processing node to select an output value from a combination of internal values: for example (but not limited to) the first internal value, the second internal value, the product of the first internal value and the second internal value, the first internal value divided by the second internal value, the second internal value divided by the first internal value, and a constant (i.e. 1). It should be understood here that these are a set of options which are in-built into the node, effectively to offer a user a choice with can then be programmed into the device. In other words, the node may be configured to perform any (i.e. all) of these functionalities, but a user may program the device to select which is used in the data processing engine in which the processing node is used.

In some embodiments, the triggering condition may be the first internal value reaching or exceeding a predetermined threshold. In other embodiments, the triggering condition may be that the input signal includes, as well as the input value, a trigger signal, which causes the processing node to emit an output signal regardless of the first internal value at that time.

Again, in line with the biological neurons, in some embodiments of the present invention, the method may further include a step of: resetting the first internal value to zero, after the output signal has been emitted by the processing node, or when it receives a reset signal.

Additionally, in some embodiments of the present invention, the method may further include a step of: resetting the first and or the second internal value to zero, before the input signal has been received by the processing node.

In line with the first aspect of the present invention, the input signal containing the input value is preferably received from an input connection. Similarly, the output signal containing the output signal is preferably emitted to an output connection. The connection (i.e. the input connection or the output connection) preferably has an associated weight.

Before discussing more details of the operation of the node, we now consider the nature of the connections. In describing the node, we have discussed the input connection and the output connection. The below comments apply equally well to either, and may apply to all connections in a data processing engine. The description below refers to "a connection", but it should be understood that this may apply to the input connection, the output connection or any connection within a data processing engine.

A connection is configured to receive, at a proximal end, an output signal containing an output value from a node (referred to as an "emitter node" or "origin node"). In other words, the method may further include the step of receiving, at the output connection, the output signal, which may be e.g. the product of the first internal value and the second internal value of the node at a given time, or may be a constant, etc.

Each connection preferably also has an associated weight, sometimes also called "efficacy" or "synaptic efficiency".

At a distal end, a connection is configured to deliver an input signal containing an input value to a first connection point or second connection point of another node (the "receiver node" or "target node"). In other words, the method may further include the step of transmitting, by the input connection, the input signal containing the input value.

In preferred embodiments of the present invention, the input value which is delivered to the receiver node is based on a product of the output value and the weight of the connection. Thus, the method may further include the step of multiplying the output value of an output signal of an emitter node by the weight of the output connection, in order to generate the input value.

The first internal value may be considered a potential value. In such cases, the input connection may be a potential-varying connection. Then, the step of varying the first internal value in response to the input signal preferably comprises varying the potential value based on the input value of the input signal received from the potential-varying connection.

In some embodiments, the varying step comprises increasing the potential value of the processing node by the input value of the input signal received from the potential-varying connection. In other words, the input value of the input signal received at the potential-varying connection represents a value which is added (or subtracted) to the potential value.

In some embodiments, the method further includes the step of resetting the second internal value to zero when it has emitted an output signal or received a reset signal.

As we have hinted at earlier, in some embodiments, the potential value may not be a constant, i.e. it may be variable. For example, in some embodiments, the method may include the step of varying the potential value with time, preferably at a constant rate. In those embodiments, the varying may be based on the current value.

The second internal value may be considered analogous to a current value. The input connection may be a current-modulating connection. Then, when an input signal is received from the current-modulating connection, the method may further include the step of varying the current value based on the input value of the input signal received from the current-modulating connection. Furthermore, the step of varying the first internal value (i.e. the potential value) of the processing node may comprise varying the potential value at a rate which is based on the current value, and preferably at a rate which is proportional to the current value. In some embodiments, the current value may also vary with time, e.g. by decaying at a linear or exponential rate.

In some embodiments, the current value of a given processing node and the potential value of the same processing node obey the following relationship:

$$V(t+\Delta t) = V(t) + in_v(t) + r \cdot G(t)$$

$$G(t+\Delta t) = G(t) + in_G(t)$$

The terms in the above equations have the same meaning as earlier in the application. Thus, the current value may be considered to represent a gradient value, with which the potential value varies with time.

A given input signal can thus influence either the potential value (first internal value) or current value (second internal value) of a processing node. In preferred embodiments, as is often the case with neural networks, the input signal and the output signals are in the form of a packet of data. Preferably, the packet contain no indication about the origin of the signal. For example, the packet may encode only the input value, and no other information. In order for the processing node to "know" how to treat a given input signal, i.e. whether it should influence the potential value or the current value, the processing node preferably includes a first connection point and a second connection point, wherein: when an input signal is received at the first connection point, the processing node is configured to treat that input signal as a potential-varying connection, and when an input signal is received at the second connection point, the processing node is configured to treat that input signal as a current-modulating connection.

In this way, when an input signal is received at the first connection point from a potential varying-connection, the processing node varies the potential as discussed above. And, when an input signal is received at the second connection point from a current-carrying connection, the processing node varies the current as discussed above. The method may include the step of receiving, at the first connection point, a plurality of input signals. Similarly, the method may also include the step of receiving, at the second connection point, a plurality of input signals.

In some embodiments, the step of receiving a plurality of input signals at the first connection point may specifically include receiving a first input signal containing a first input value, and receiving a second input signal containing a second input value. In such cases, the method may further include the steps of varying the potential value based on the first input value and the second input value. For example, the step of varying may comprise varying the potential value by an amount which is based on, or equal to, the sum of the first input value and the second input value.

Alternatively, the method may include the steps of: receiving, at the first connection point, a first input signal containing a first input value; varying the potential value based on the first input value; receiving, at the first connection point, a second input signal containing a second input value; and varying the potential value based on the second input value. This feature accounts for the scenario in which the first input signal and the second input signal are not received simultaneously, as is often the case for networks based on spiking neural networks, in which time is a key factor.

In some embodiments, the step of receiving a plurality of input signals at the second connection point may specifically include receiving a first input signal containing a first input value, and receiving a second input signal containing a second input value. In such cases, the method may further include the steps of varying the current value based on the first input value and the second input value. For example, the step of varying may comprise varying the current value by an amount which is based on, or equal to, the sum of the first input value and the second input value. Alternatively, the method may include the steps of: receiving, at the second connection point, a first input signal containing a first input value; varying the current value based on the first input value; receiving, at the second connection point, a second input signal containing a second input value; and varying the current value based on the second input value.

In some embodiments, the processing node may be configured to operate with a propagation delay. The delay may be a property of the connection (i.e. the input connection or the output connection). It will be explained here with reference to the input connection but it will be appreciated that the explanation applies equivalently to the output connection. The input connection may have an associated delay parameter. As with the weight, the delay parameter is a property of the connection itself, and is independent of the signal which is being conveyed by the connection.

In such embodiments, when an input signal is received from the input connection, the step of varying the first internal value or the second internal value preferably takes place after a predetermined amount of time has elapsed, wherein the predetermined amount of time is based on the delay parameter.

The method of the third aspect of the invention may be a computer-implemented method. A fourth aspect of the invention provides a processing node, for example but not necessarily according to the first aspect of the invention, configured to perform the method of the third aspect of the invention. A fifth aspect of the invention may provide a data processing engine, for example but not necessarily according to the second aspect of the invention, which includes a plurality of processing nodes according to the fourth aspect of the invention.

A sixth aspect of the present invention provides a computer program or computer program product comprising instructions which, when the program is executed on a computer, cause the computer to carry out the method of the third aspect of the invention. A seventh aspect of the invention provides a computer-readable storage medium comprising instructions which, when executed on a computer, cause the computer to carry out the method of the third aspect of the invention. Optional features set out with respect to the third aspect of the invention apply equally well to various embodiments of the sixth and seventh aspects of the invention.

According to an eighth aspect of the invention, a processing node of the first or fourth aspects of the present invention may be embodied in a software application. For example, such a software application may include: a receiving module configured to receive an input signal from an input connection; a first internal value storage module configured to store the first internal value; a first internal value variation module configured to vary the first internal value in response to the input signal; a triggering module configured to determine when a triggering condition is met; and an output module configured to emit an output signal containing an output value to an output connection, when it is determined that the triggering condition is met. The software application may also include a second internal value storage module configured to store the second internal value, and optionally a second internal value variation module configured to vary the second internal value. The software application may further include an output value calculation module configured to determine or calculate the output value based on one or more of the first internal value and the second internal value. Indeed all optional features of the invention set out above with respect to the first aspect of the invention may be embodied using suitable software modules, to the extent that they are compatible.

Similarly to the above paragraph, in a ninth aspect of the invention a data processing engine of the second or fifth aspect of the invention may also be embodied in a software application, the data processing engine software application comprising a plurality of processing node software applications of the third aspect of the invention. The optional features described with reference to the data processing engine above, applying in particular (but not exclusively) to the types of processing node forming the plurality of processing nodes, apply equally well to the data processing engine software application. All other optional features of the data processing engine as set out above with reference to the second aspect of the invention also apply equally well to implementations in which the data processing is embodied as a software application.

Further optional features of the invention are set out below.

BRIEF DESCRIPTION OF THE DRAWINGS

The invention will be described with reference to the drawings, in which:

- Fig. 1 shows an example of a processing node of the first aspect of the invention.

- Fig. 2 shows an addition machine that may be constructed using processing nodes of the first aspect of the invention.

- Fig. 3 shows a multiplication machine that may be constructed using processing nodes of the first aspect of the invention.

- Fig. 4 shows a comparison machine that may be constructed using processing nodes of the first aspect of the invention.

- Fig. 5 shows a hybrid calculation machine that may be constructed using processing nodes of the first aspect of the invention.

- Fig. 6 shows a machine for converting interval spaced inputs from an event-based sensor into grayscale levels, which may be constructed using processing nodes of the first aspect of the invention.

- Fig. 7 shows an implementation of a Lorenz attractor that may be constructed using processing nodes of the first aspect of the invention.

- Fig. 8 shows an example of an artificial neural network.

- Fig. 9 shows an example of a system including a camera and a data processing engine according to the second aspect of the present invention.

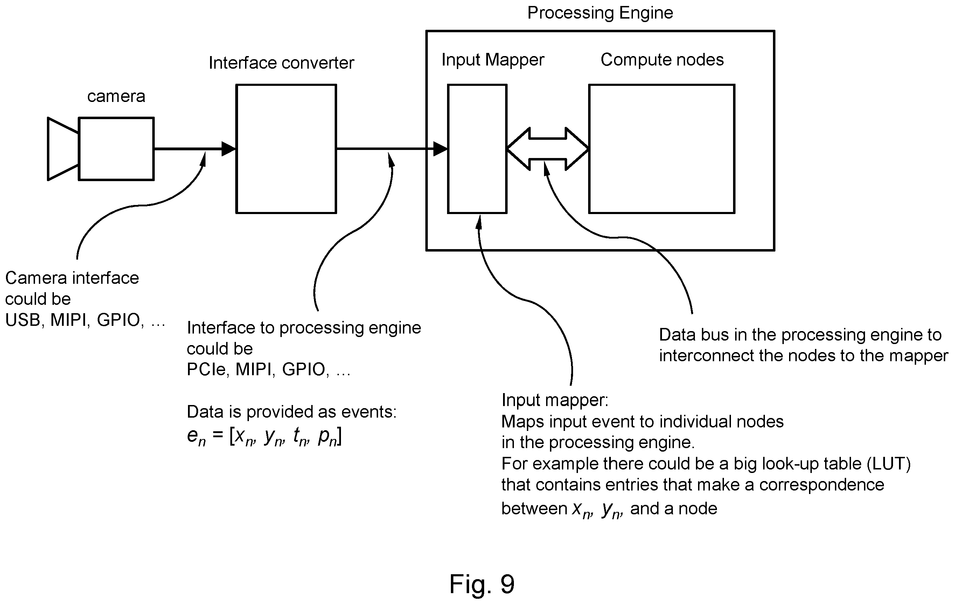

It is pointed out that only Fig.9 shows a claimed embodiment.

The embodiments of the other figures, and of the corresponding passages of the description, only relate to aspects that are useful for understanding the claimed invention.

DETAILED DESCRIPTION

The present invention will now be described in detail with reference to the drawings. Before discussing the drawings in detail, the mathematical representation of the invention will be discussed in detail.

As has been discussed above, the equations that describe the neural network model of the present invention are:

$$V(t+\Delta t) = V(t) + in_v(t) + r \cdot G(t)$$

$$G(t+\Delta t) = G(t) + in_G(t)$$

Where t represents the time and $\Delta t$ represents the time-step, V represents the first internal value and G represents the second variable or "current" or "bias".

Moreover, when $V$ or $G$ receive an incoming input, their value is increased by $in_V$ or $in_G$ respectively. Additionally, when. in one of the embodiments. V reaches a given threshold $V_{thr}$, or when a trigger signal is received, a node outputs an output signal having an output value of one of: 1, V, G, V.G, or $V/G$. It is possible to connect together many neurons of this type, indicating the weight of the connection and the delay parameter, in order to obtain specific desired outputs. As noted earlier in this application, the weight and the delay parameter are properties of the connections themselves, and independent of the values being conveyed along a given connection.

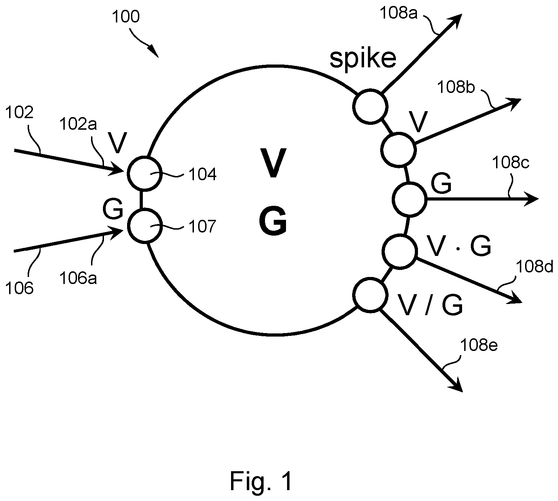

Fig. 1 shows, schematically, a neuron 100 or processing node according to the first aspect of the present invention. Fig. 1 includes a first input connection 102, the distal end 102a of which meets the node 100 at the first connection point 104. Signals arriving at the first input connection point 104 affect the potential $V$ of the node 100, and as such the first input connection 102 acts as a potential-varying connection. There is also a second input connection 106, the distal end 106a which meets the node 100 at the second connection point 107. Signals arriving at the second input connection point 107 affect the current G of the node 100, and as such the second input connection acts as a current-modulating connection. The values of the potential and current are denoted $V$ and G in the centre of the node 100. In Fig. 1, the node 100 is shown to have five output connections, 108a to 108e. However, in reality, the node 100 is configured only to output a signal from one of these output connections 108a to 108e. The node 100 is programmable to select which output connection 108a to 108e is used. Each of the output connections 108a to 108e is configured to output a different output value. Specifically, when output connection 108a is in use, the node is configured to emit a spike, i.e. a signal having a constant value, preferably one. A network made up of nodes employing only output connections 108a would be analogous to the conventional spiking neural network discussed earlier in the application.

The present invention differs from known processing nodes for use in neural networks in that it is able to encode values other than 1 (or a constant value) into output signals. This is exemplified by the node 100 shown in Fig. 1:

- When output 108b is in use, the node is configured to output an output signal having an output value of V, that is to say, the potential value of the node 100 at the time the output signal is emitted.

- When output 108c is in use, the node is configured to output an output signal having an output value of GS, that is to say, the current value of the node 100 at the time the output signal is emitted.

- When output 108d is in use, the node is configured to output an output signal having an output value of $V.G$, that is to say, the product of the potential value and the current value of the node 100 at the time the output signal is emitted.

- When output 108e is in use, the node is configured to output an output signal having an output value of $V/G$, that is to say, the potential value of the node 100, divided by the current value of the node 100, at the time the output signal is emitted.

The node 100 shown in Fig. 1 shows only an example set of possible output values. The skilled person is readily-aware that the node 100 could be configured to output other values, i.e. the results of other operations based on the current value and the potential value.

The signals output from the node 100 may be in the form of packets of data. Such packets contain no indication about the origin of the signal. They include only the output value (multiplied by the weight of the output connection 108a to 108e). In other words, a packet transmitting the value of G is indistinguishable from a packet transmitting the value of V, or a simple spike. It is possible to connection any output synapse (i.e. output connection) to any input synapse (i.e. input connection point) of another node (not shown), or even to the same node 100.

We now set out a formal description of a neural network including the processing nodes of the present invention. The neural network can be described as:

$$G = (N, S, src, dst, d, w, ntype, stype, \rho, \tau)$$

In this expression, N refers to the set of neurons or nodes, $S$ is the set of synapses, and the remaining terms are described below.

- $w : S \to \mathbb{R}$ such that $w(s)$ is the synaptic weight of the synapse s.

- $d : S \to \mathbb{N}$ such that $d(s)$ is the synaptic delay of the synapse s.

- *src: S → N* such that *src(s)* denotes the source neuron of synapse s.

- *dst: S → N* such that *dst(s)* denotes the destination neuron of synapse s.

- *ntype: N → {spike, V,* G, *Mul, Div}* such that *ntype(s)* denotes the output type/behaviour of neuron s.

- *stype: S → {V, G}* such that *stype(s)* denotes the type of input synapse s.

- $\rho$: *S → {V, G}* such that $\rho(s)$ denotes whether a reset is sent by synapse s if it transmits an output signal towards its destination neuron *dst(s)*. Thus $\rho(s) = 0$ denotes that *dst(s)* does not receive resets from synapse s, while $\rho(s) = 1$ denotes that neuron *dst(s)* will receive a reset signal if synapse s transmits an output signal.

- $\tau$: *S → {0,1}* such that $\tau(s)$ denotes whether a trigger is sent through synapse s if it transmits an output signal towards its destination neuron *dst(s)*. Thus $\tau(s) = 0$ denotes that *dst(s)* does not receive triggers from synapse *s*, while $\tau(s) = 1$ denotes that neuron *dst(s)* will receive a trigger signal if synapse s transmits a spike.

The above is a static description of the network. We now proceed to parameterize the dynamics of the network, and in particular the four types of node.

In order to describe the dynamic behaviour of a neural network, we will use a set of functions with a time step variable *k*. Several of these functions are polymorphic, meaning that there are often two versions of a function with either a neuron or a synapse as an argument. The following functions describe the spiking nature of neurons.

- $\sigma : N \times \mathbb{N}_0 \to \{0,1\}$ denotes the spiking state of a neuron (i.e. whether or not the neuron emits an output signal). So $\sigma(n, k) = 0$ denotes that neuron *n* does not emit an output signal at time step *k*, while $\sigma(n, k) = 1$ denotes that neuron *n* does emit an output signal at time step *k*.

- $\sigma : S \times \mathbb{N}_0 \to \{0,1\}$ denotes the output signal carried by a synapse *s*. So $\sigma(s, k) = 0$ denotes that neuron *dst(s)* does not receive an output signal from synapse *s* at time step *k*, while $\sigma(s, k) = 1$ denotes that neuron *dst(s)* does receive an output signal from synapse s at time step *k*.

The neurons according to embodiments of the present invention are able to emit/receive signals that have values other than 1, i.e. signals which are not just spikes. For that reason, two additional functions are defined

- $\mu: S \times \mathbb{N}_0 \to \mathbb{R}$ such that $\mu(n, k)$ denotes the output value that will carried by a synapse that will be sent with an event (i.e. output signal) by neuron *n* at time step *k.*

- $\mu: S \times \mathbb{N}_0 \to \mathbb{R}$ such that $\mu(s, k)$ denotes the output value that will carried by a synapse to its destination node *dst(s)* at time step *k.*

The functions *V(n*, k) and *G(n, k)* describe the state of a neuron n at a time step *k.*

The transport equations which describe the behaviour of neural networks according to the present invention are as follows.

-

$$\sigma(s, k) = \sigma\big(src(s), k - d(s)\big) \text{ for } k \geq d(s)$$

-

$$\sigma(s, k) = 0 \text{ for } k < d(s)$$

-

$$\mu(s, k) = \mu\big(src(s), k - d(s)\big) \text{ for } k \geq d(s)$$

-

$$\mu(s, k) = 0 \text{ for } k < d(s)$$

The following equations compute the neuron state updates based on synaptic activity on the neuron's input synapses. In the following expressions, let $S(n) = \{s \in S: dst(s) = n\}$, to make the domains of the summations easier to write. Also let ~*f* denote the Boolean negation of the value of function *f*. Then:

$$G(n, 0) = 0$$

$$V(n, 0) = 0$$

For k > 0:

$$G(n, k) = G(n, k - 1) \cdot \prod_{s \in S(n)} \big(\sim(\rho(s) \cdot \sigma(s, k))\big) + \sum_{s \in S(n) = stype(s) = G} \big(w(s) \cdot \mu(s, k) \cdot \sigma(s, k)\big)$$

$$V(n, k) = V(n, k - 1) \cdot \prod_{s \in S(n)} \big(\sim(\rho(s) \cdot \sigma(s, k))\big) + \sum_{s \in S(n) = stype(s) = V} \big(w(s) \cdot \mu(s, k) \cdot \sigma(s, k)\big) + G(n, k)$$

An output signal is emitted by a given neuron, at time step k is the neuron receives a trigger:

$$\sigma(n, k) = \bigvee_{s \in S(n)} \tau(s), \sigma(s, k)$$

The output value of an output signal at time step k is defined by the neurons state and the neuron type:

- When *ntype(n) = V,* $\mu(n, k) = V(n, k)$

- When $ntype(n)$ = G, $\mu(n, k)$ = G$(n, k)$

- When $ntype(n)$ = $Mul$, $\mu(n, k)$ = $V(n, k) \cdot$ G$(n, k)$

- When $ntype(n)$ = $Div$, $\mu(n, k)$ = $V(n, k)$/G$(n, k)$

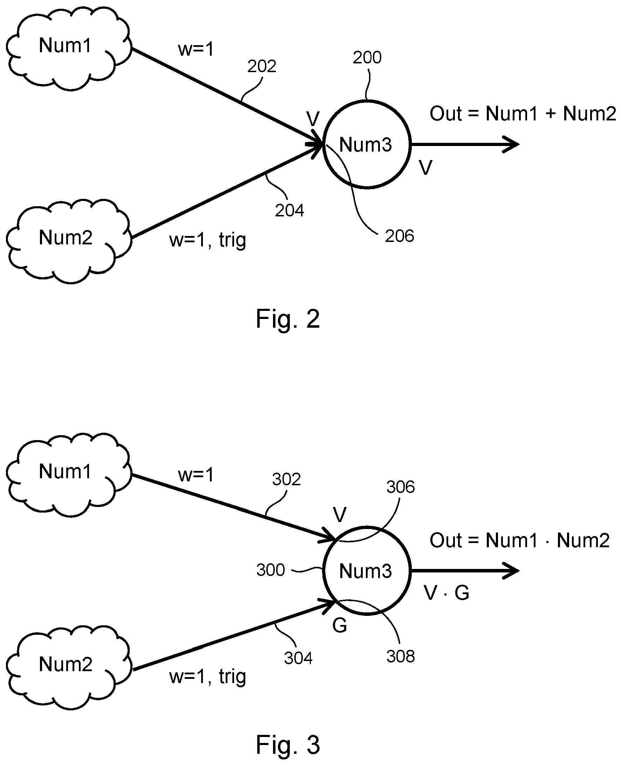

Example simple computing machines which can be created using nodes according to the first aspect of the present invention are now described, with reference to Figs. 2 to 7 of the application.

Fig. 2 shows an example simple data processing engine in which a node 200 can be used to perform a simple addition operation. The node has two input connections 202, 204 each configured to deliver a signal to a connection point 206. In the embodiment shown, connection point 206 is a potential-type, and thus input connections 202, 204 are treated as potential-varying input connections 202, 204. Num1 and Num2 are computed and transmitted, in the embodiment shown in Fig. 1 by some external unspecified subnetworks - but they could equally well be other nodes according to the present invention.

Connection 202 has a weight of 1, and connection 204 has a weight of 1. The signal carried by connection 204 further includes a trigger. The output type of node 200 is V.

From this, it can be seen that:

$$V = w_1 \cdot Num1 + w_2 \cdot Num2$$

Substituting in $V_{init}$ = 0, $w_1 = w_2$ = 1, it becomes clear that the output is given by:

$$V = Num1 + Num2$$

The input signal of input connection 204 also carries a trigger signal, which causes the node 200 to output the value of V. This, of course, works just as well with more than two inputs. Furthermore, a subtraction operation can also be performed, by changing the value of $w_2$ to -1.

Fig. 3 shows how a node 300 may be used to perform a multiplication operation.

The node 300 has two input connections 302, 304 configured respectively to deliver a signal to a connection points 306, 308. In the embodiment shown, connection point 306 is a potential-type, and thus input connection 302 is treated as a potential-varying input connections 302. Conversely, connection point 308 is a current-type, and thus input connection 304 is treated as a current-modulating input connection 304. Num1 and Num2 are computed and transmitted, in the embodiment shown in Fig. 1 by some external unspecified subnetworks - but they could equally well be other nodes according to the present invention.

Connection 302 has a weight of 1, and connection 304 has a weight of 1. The signal carried by connection 304 further includes a trigger. r = 0. The output type of node 300 is Mul.

From this, it can be seen that:

$$V = w_1 \cdot Num.\,1$$

$$G = w_2 \cdot Num2$$

Then, the output is given by:

$$V \cdot G = Num1 \cdot Num2$$

The input signal of input connection 304 also carries a trigger signal, which causes the node 300 to output the value of $V \cdot g_e$. In this case, such a simple multiplication machine is only operable with two inputs. A division machine can be constructed in the same way, substituting the $Mul$ type node 300 with a $Div$ type node.

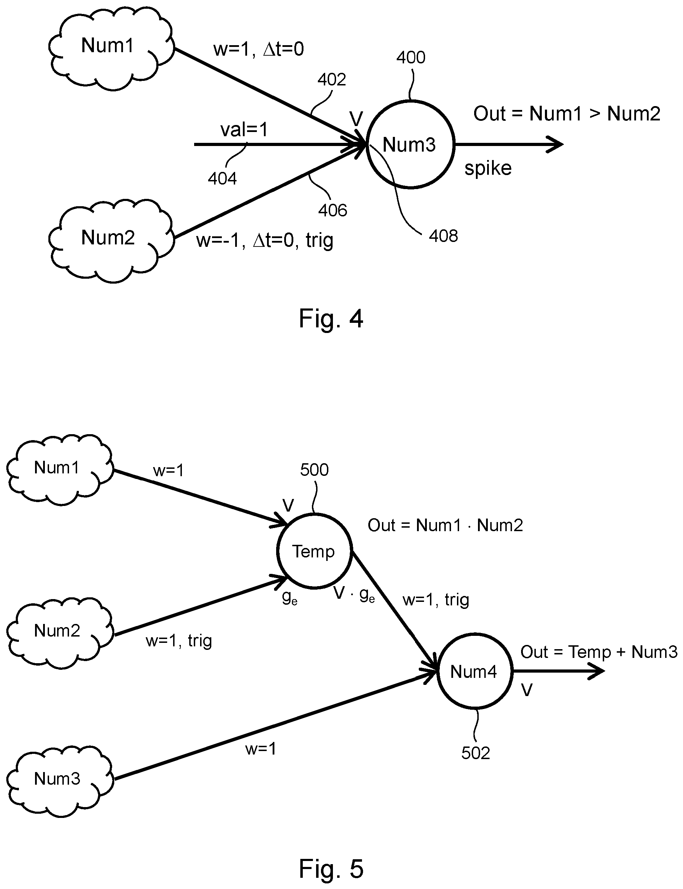

The arrangement shown in Fig. 4 is a little more complicated, and forms a comparison operator, configured to transmit an output signal in the form of a spike in the event that Num1 is greater than

Num2. This can be achieved using just a single node 400. There are three input connections 402, 404, 406, each delivering input signals to connection point 408, which in this case is a potential-type connection point 408, and thus the input connections 402, 406, 408 are treated as potential-varying input connections 402, 404, 406. As before, Num1 and Num2 are computed and transmitted by some external unspecified subnetworks - but they could equally well be other nodes according to the present invention.

Connection 408 delivers a spike input signal, with a value of 1. So:

$$V = 1 + w_1 \cdot Num1 + w_2 \cdot Num2$$

Taking values $V_{init} = 0$, $w_1 = 1$, $w_2 = -1$, we see:

$$V = 1 + Num1 - Num2$$

By setting the node 400 to have a threshold $V_{thr} = 1$, it may be seen that if Num1 > Num2, the value of $V$ will be higher than 1, and therefore the spike will be emitted. Conversely, if Num2 > Num 1, $V$ will be less than 1, and the threshold will not be met. There will therefore be no output from node 400.

Using processing nodes according to embodiments of the present invention, it is straightforward to construct larger networks which can perform more complex operations than those described above. For example, to calculate:

$$Num4 = Num1 \cdot Num2 + Num3$$

It is possible to assemble a network as shown in Fig. 5 of the present application, which includes just two processing nodes 500 and 502.

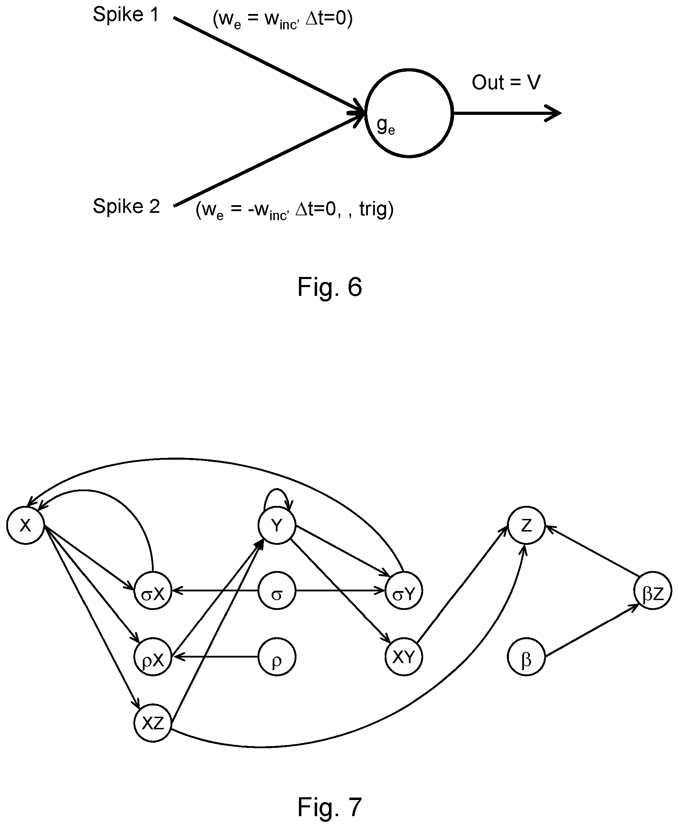

Fig. 6 shows a network that is arranged to convert signals from an event-based vision sensor in order to obtain the corresponding grayscale level. The detailed mechanism is the following: when a first spike arrives from the sensor indicating that the grayscale signal is being send, it sets G to the value $w_{inc}$, which determines the granularity of the counter and can be as small as $2^{-16}$ bits. Thereafter, the value of V will increase by the amount indicated by G, i.e. $w_{inc}$, on each iteration. When the second spike arrives, indicating that the grayscale value has been completely transmitted, G is set to zero, due to the connection weight being $-w_{inc}$, and the neuron will be triggered to output the value contained in V, which is a measure of the ISI (which is inversely proportional to the grayscale level, by construction).

Fig. 7 shows an alternative example in the form of a Lorenz attractor. The general equations describing the behaviour of the Lorenz attractor are as follows:

$$\dot{x} = \sigma \cdot (y - x)$$

$$\dot{y} = -x.y + \rho.x - y$$

$$\dot{z} = x.y - \beta.z$$

This can be implemented using the arrangement of Fig. 7.

Fig. 9 shows an example of a system employing a data processing engine according to the second aspect of the present invention. Here, the system includes a camera, which is configured to detect changes in luminosity of an array of pixels, which are then transmitted, via an interface converted into event signals of the form $e_n$ as shown. These signals are then input into the processing engine. An input mapper maps the received events to the appropriate node within the data processing engine, and forwards it there. That node is then computed.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

**Claims**

1. A system comprising:

a camera configured to detect changes in luminosity of an array of pixels;
an interface configured to convert the detected changes into event signals ($e_n = [x_n, y_n, z_n, p_n]$);
a data processing engine, including an input mapper, a plurality of processing nodes that are arranged two-dimensionally in space, connections between the nodes, and a data bus to interconnect the nodes to the input mapper, the input mapper being configured to map the events received from the interface to the appropriate processing node within the data processing engine, to forwards it there; wherein:

respective connections have a first end, being a proximal end and a second end, being a distal end;
each processing node of at least a subset of the processing nodes is specified by the following properties:

EP 3 948 675 B1

the processing node has an input connection and an output connection, wherein:

the processing node has an associated first internal value;
the processing node is configured to receive an input signal from the input connection, the input signal containing an input value;
the processing node is configured to vary the first internal value in response to the input signal; and when a triggering condition is met, the processing node is configured to emit an output signal containing an output value, to the output connection, the output value being based on a function of the first internal value, wherein the triggering condition is either the first internal value reaching or exceeding a predetermined threshold or the input signal including in addition to the input value, a trigger signal, which causes the processing node to emit an output signal regardless of the first internal value at that time.

2. The system according to claim 1, wherein:
the output value of said each processing node of at least a subset of the processing nodes is based on a function of the first internal value and the input value.

3. The system according to claim 1 or claim 2, wherein:
said each processing node of at least a subset of the processing nodes has an associated second internal value, and the output value is based on a calculation including the first internal value and the second internal value.

4. The system according to claim 3, which is programmable to select an output value from:
the first internal value, the second internal value, the product of the first internal value and the second internal value, the first internal value divided by the second internal value, the second internal value divided by the first internal value, and a constant.

5. The system according to any one of claims 1 to 4, wherein:

the input connection of said each processing node of at least a subset of the processing nodes is configured to receive, at its proximal end, an output signal from a second processing node;
the input connection has an associated weight; and
the input value which is received by said each processing node is based on a product of an output value of the second processing node and the weight of the input connection.

6. The system according to claim 3 or 4, wherein:

the distal end of the input connection is configured to deliver the input signal to a first connection point or to a second connection point of said each processing node of at least a subset of the processing nodes;
the processing node is configured to vary the first internal value or the second internal value based on the input value received from the input connection;
the input connection is a potential-varying connection; and
when an input signal is received from the potential-varying connection, the processing node is configured to vary the first internal value based on the input value of the input signal received from the potential-varying connection.

7. The system according to any one of claims 1 to 6, wherein:
the first internal value varies with time.

8. The system according to any one of claims 3, 4 or 6, wherein:
said each processing node of at least a subset of the processing nodes is configured to vary the first internal value at a rate which is proportional to the second internal value.

9. The system according to any one of claims 1 to 8, wherein:

said each processing node of at least a subset of the processing nodes includes a first connection point and a second connection point,
when an input signal is received at the first connection point, the processing node is configured to treat that input signal as a potential-varying signal, and
when an input signal is received at the second connection point, the processing node is configured to treat that

16

input signal as a current-modulating signal.

10. The system according to any one of the claims 3, 4, 6 or 8, wherein:

the input connection has an associated delay parameter,
when an input signal is received from the input connection, said each processing node of at least a subset of the processing nodes is configured to vary the first internal value or the second internal value after a predetermined amount of time has elapsed, the predetermined amount of time being based on the delay parameter.

11. The system according to claim 10, wherein the data processing engine is configured to receive event-based detection data.

12. The system according to claim 11, wherein:

the data processing engine is further configured to process analogue or continuous data; and
the data processing engine includes a sampling module configured to sample the incoming continuous data and to convert it into a series of spikes, each having a value represented by its amplitude, which spikes form the input signals to the processing nodes.

13. A method of operating a system according to any of the claims 1-12,
the method including the steps of:

the camera detecting changes in luminosity of an array of pixels;
the interface converting the detected changes into event signals ($e_n = [x_n, y_n, z_n, p_n]$);
the input mapper mapping the event signals to an appropriate processing node within the data processing engine, and forwarding it there;
receiving, at a processing node having an associated first internal value, an input signal containing an input value;
varying the first internal value of the processing node in response to the input signal; and
when a triggering condition is met, emitting an output signal containing an output value, the output value being based on a function of the first internal value, wherein the triggering condition is either the first internal value reaching or exceeding a predetermined threshold or the input signal including in addition to the input value, a trigger signal, which causes the processing node to emit an output signal regardless of the first internal value at that time.

**Patentansprüche**

1. System, umfassend:

eine Kamera, dazu ausgestaltet, Leuchtstärkenänderungen einer Pixelanordnung zu erkennen;
eine Schnittstelle, dazu ausgestaltet, die erkannten Änderungen in Ereignissignale ($e_n = [x_n, y_n, z_n, p_n]$) umzuwandeln;
eine Datenverarbeitungs-Engine, umfassend einen Eingangsmapper, eine Mehrzahl an Verarbeitungsknoten, die zweidimensional im Raum angeordnet sind, Anschlüsse zwischen den Knoten und einen Datenbus zum Verbinden der Knoten mit dem Eingangsmapper, wobei der Eingangsmapper dazu ausgestaltet ist, die von der Schnittstelle empfangenen Ereignisse zu dem entsprechenden Verarbeitungsknoten innerhalb der Datenverarbeitungs-Engine zu mappen, um sie dort weiterzuleiten; wobei:

jeweilige Anschlüsse ein erstes Ende, das ein proximales Ende ist, und ein zweites Ende, das ein distales Ende ist, aufweisen;
jeder Verarbeitungsknoten von mindestens einer Teilmenge der Verarbeitungsknoten durch folgende Eigenschaften spezifiziert ist:
der Verarbeitungsknoten weist einen Eingangsanschluss und einen Ausgangsanschluss auf, wobei:

der Verarbeitungsknoten einen zugehörigen ersten internen Wert aufweist;
der Verarbeitungsknoten dazu ausgestaltet ist, ein Eingangssignal von dem Eingangsanschluss zu empfangen, wobei das Eingangssignal einen Eingangswert enthält;
der Verarbeitungsknoten dazu ausgestaltet ist, den ersten internen Wert in Reaktion auf das Eingangssignal zu variieren; und

wenn eine Auslösebedingung erfüllt ist, ist der Verarbeitungsknoten dazu ausgestaltet ist, ein Ausgangssignal, das einen Ausgangswert enthält, an den Ausgangsanschluss zu senden, wobei der Ausgangswert auf einer Funktion des ersten internen Wertes basiert, wobei die Auslösebedingung entweder ist, dass der erste interne Wert einen vorbestimmten Schwellenwert erreicht oder überschreitet, oder das Eingangssignal zusätzlich zum Eingangswert ein Auslösesignal umfasst, das den Verarbeitungsknoten veranlasst, zu diesem Zeitpunkt unabhängig vom ersten internen Wert ein Ausgangssignal auszugeben.

2. System nach Anspruch 1, wobei:
der Ausgangswert jedes Verarbeitungsknotens von wenigstens einer Teilmenge der Verarbeitungsknoten auf einer Funktion des ersten internen Wertes und des Eingangswertes basiert.

3. System nach Anspruch 1 oder Anspruch 2, wobei:
jeder Verarbeitungsknoten von wenigstens einer Teilmenge der Verarbeitungsknoten einen zugehörigen zweiten internen Wert aufweist, und der Ausgangswert auf einer Berechnung basiert, umfassend den ersten internen Wert und den zweiten internen Wert.

4. System nach Anspruch 3, das dazu programmierbar ist, einen Ausgangswert auszuwählen aus:
dem ersten internen Wert, dem zweiten internen Wert, dem Produkt aus dem ersten internen Wert und dem zweiten internen Wert, dem ersten internen Wert, geteilt durch den zweiten internen Wert, dem zweiten internen Wert, geteilt durch den ersten internen Wert, und einer Konstante.

5. System nach einem der Ansprüche 1 bis 4, wobei:

der Eingangsanschluss des jeweiligen Verarbeitungsknotens von wenigstens einer Teilmenge der Verarbeitungsknoten dazu ausgestaltet ist, an seinem proximalen Ende ein Ausgangssignal von einem zweiten Verarbeitungsknoten zu empfangen;
die Eingangsanschluss ein zugehöriges Gewicht aufweist; und
der Eingangswert, der von dem jeweiligen Verarbeitungsknoten empfangen wird, auf einem Produkt aus einem Ausgangswert des zweiten Verarbeitungsknotens und dem Gewicht des Eingangsanschlusses basiert.

6. System nach Anspruch 3 oder 4, wobei:

das distale Ende des Eingangsanschlusses dazu ausgestaltet ist, das Eingangssignal an einen ersten Anschlusspunkt oder an einen zweiten Anschlusspunkt des jeweiligen Verarbeitungsknotens von wenigstens einer Teilmenge der Verarbeitungsknoten zu übertragen;
der Verarbeitungsknoten dazu ausgestaltet ist, den ersten internen Wert oder den zweiten internen Wert basierend auf dem vom Eingangsanschluss empfangenen Eingangswert zu variieren;
der Eingangsanschluss ein potentialvariabler Anschluss ist; und
wenn ein Eingangssignal von dem potentialvariablen Anschluss empfangen wird, der Verarbeitungsknoten dazu ausgestaltet ist, den ersten internen Wert auf Grundlage des Eingangswerts des von dem potentialvariablen Anschluss empfangenen Eingangssignals zu variieren.

7. System nach einem der Ansprüche 1 bis 6, wobei:
der erste interne Wert mit der Zeit variiert.

8. System nach einem der Ansprüche 3, 4 oder 6, wobei:
jeder Verarbeitungsknoten von wenigstens einer Teilmenge der Verarbeitungsknoten dazu ausgestaltet ist, den ersten internen Wert in einer Rate zu variieren, die proportional zum zweiten internen Wert ist.

9. System nach einem der Ansprüche 1 bis 8, wobei:

jeder Verarbeitungsknoten von wenigstens einer Teilmenge der Verarbeitungsknoten einen ersten Anschlusspunkt und einen zweiten Anschlusspunkt umfasst,
wenn ein Eingangssignal am ersten Anschlusspunkt empfangen wird, der Verarbeitungsknoten dazu ausgestaltet ist, dieses Eingangssignal als ein potentialvariables Signal zu behandeln, und
wenn ein Eingangssignal am zweiten Anschlusspunkt empfangen wird, der Verarbeitungsknoten dazu ausge-

**EP 3 948 675 B1**

staltet ist, dieses Eingangssignal als ein strommodulierendes Signal zu behandeln.

10. System nach einem der Ansprüche 3, 4, 6 oder 8, wobei:

der Eingangsanschluss einen zugehörigen Verzögerungsparameter aufweist,
wenn ein Eingangssignal von dem Eingangsanschluss empfangen wird, jeder Verarbeitungsknoten von mindestens einer Teilmenge der Verarbeitungsknoten dazu ausgestaltet ist, den ersten internen Wert oder den zweiten internen Wert nach Ablauf einer vorbestimmten Zeitdauer zu variieren, wobei die vorbestimmte Zeitdauer auf dem Verzögerungsparameter basiert.

11. System nach Anspruch 10, wobei die Datenverarbeitungs-Engine dazu ausgestaltet ist, ereignisbasierte Erkennungsdaten zu empfangen.

12. System nach Anspruch 11, wobei:

die Datenverarbeitungs-Engine ferner dazu ausgestaltet ist, analoge oder kontinuierliche Daten zu verarbeiten; und
die Datenverarbeitungs-Engine ein Abtastmodul umfasst, das dazu ausgestaltet ist, die eingehenden kontinuierlichen Daten abzutasten und in eine Reihe von Spitzen umzuwandeln, die jeweils einen Wert aufweisen, der durch ihre Amplitude repräsentiert ist, wobei die Spitzen die Eingangssignale zu den Verarbeitungsknoten bilden.

13. Verfahren zum Betreiben eines Systems nach einem der Ansprüche 1 bis 12, wobei das Verfahren folgende Schritte umfasst:

Erkennen, durch die Kamera, von Leuchtstärkenänderungen einer Pixelanordnung;
Umwandeln, durch die Schnittstelle, der erkannten Änderungen in Ereignissignale ($e_n = [x_n, y_n, z_n, p_n]$);
Mappen, durch den Ereignis-Mapper, der Ereignissignale zu einem entsprechenden Verarbeitungsknoten innerhalb der Datenverarbeitungs-Engine, um sie dort weiterzuleiten;
Empfangen, an einem Verarbeitungsknoten mit einem zugehörigen ersten internen Wert, eines Eingangssignals, das einen Eingangswert enthält;
Variieren des ersten internen Werts des Verarbeitungsknotens in Reaktion auf das Eingangssignal; und
wenn eine Auslösebedingung erfüllt ist, Senden eines Ausgangssignals, das einen Ausgangswert enthält, wobei der Ausgangswert auf einer Funktion des ersten internen Werts basiert, wobei die Auslösebedingung entweder ist, dass der erste interne Wert einen vorbestimmten Schwellenwert erreicht oder überschreitet, oder das Eingangssignal zusätzlich zum Eingangswert ein Auslösesignal umfasst, das den Verarbeitungsknoten veranlasst, ungeachtet des ersten internen Werts zu diesem Zeitpunkt ein Ausgangssignal zu senden.

**Revendications**

1. Système comprenant :

une caméra configurée pour détecter des changements de luminosité d'un réseau de pixels ;
une interface configurée pour convertir les changements détectés en signaux d'événements ($e_n = [x_n, y_n, z_n, p_n]$) ;
un moteur de traitement de données comportant un mappeur d'entrée, une pluralité de nœuds de traitement qui sont agencés en deux dimensions dans l'espace, des connexions entre les nœuds, et un bus de données pour interconnecter les nœuds au mappeur d'entrée, le mappeur d'entrée étant configuré pour mapper des événements reçus de l'interface au nœud de traitement approprié à l'intérieur du moteur de traitement de données pour les y transférer ; dans lequel :

des connexions respectives ont une première extrémité qui est une extrémité proximale et une deuxième extrémité qui est une extrémité distale ;
chaque nœud de traitement d'au moins un sous-ensemble des nœuds de traitement est spécifié par les propriétés suivantes :
le nœud de traitement a une connexion d'entrée et une connexion de sortie, dans lequel :

le nœud de traitement a une première valeur interne associée ;
le nœud de traitement est configuré pour recevoir un signal d'entrée de la connexion d'entrée, le signal

19

d'entrée contenant une valeur d'entrée ;

le nœud de traitement est configuré pour faire varier la première valeur interne en réponse au signal d'entrée ; et

lorsqu'une condition de déclenchement est remplie, le nœud de traitement est configuré pour émettre un signal de sortie contenant une valeur de sortie vers la connexion de sortie, la valeur de sortie étant basée sur une fonction de la première valeur interne, dans lequel la condition de déclenchement est soit la première valeur interne atteignant ou dépassant un seuil prédéterminé, soit le signal d'entrée comportant, en plus de la valeur d'entrée, un signal de déclenchement qui amène le nœud de traitement à émettre un signal de sortie indépendamment de la première valeur interne à ce moment-là.

2. Système selon la revendication 1, dans lequel :
la valeur de sortie de chacun desdits nœuds de traitement d'au moins un sous-ensemble des nœuds de traitement est basée sur une fonction de la première valeur interne et de la valeur d'entrée.

3. Système selon la revendication 1 ou la revendication 2, dans lequel :
chacun desdits nœuds de traitement d'au moins un sous-ensemble des nœuds de traitement a une deuxième valeur interne associée, et la valeur de sortie est basée sur un calcul comportant la première valeur interne et la deuxième valeur interne.

4. Système selon la revendication 3, qui est programmable pour sélectionner une valeur de sortie parmi :
la première valeur interne, la deuxième valeur interne, le produit de la première valeur interne et de la deuxième valeur interne, la première valeur interne divisée par la deuxième valeur interne, la deuxième valeur interne divisée par la première valeur interne, et une constante.

5. Système selon l'une des revendications 1 à 4, dans lequel :

la connexion d'entrée de chacun desdits nœuds de traitement d'au moins un sous-ensemble des nœuds de traitement est configurée pour recevoir, à son extrémité proximale, un signal de sortie d'un deuxième nœud de traitement ;

la connexion d'entrée a un poids associé ; et

la valeur d'entrée qui est reçue par chacun desdits nœuds de traitement est basée sur un produit d'une valeur de sortie du deuxième nœud de traitement et du poids de la connexion d'entrée.

6. Système selon la revendication 3 ou 4, dans lequel :

l'extrémité distale de la connexion d'entrée est configurée pour délivrer le signal d'entrée à un premier point de connexion ou à un deuxième point de connexion de chacun desdits nœuds de traitement d'au moins un sous-ensemble des nœuds de traitement ;

le nœud de traitement est configuré pour faire varier la première valeur interne ou la deuxième valeur interne sur la base de la valeur d'entrée reçue de la connexion d'entrée ;

la connexion d'entrée est une connexion à variation de potentiel ; et

lorsqu'un signal d'entrée est reçu de la connexion à variation de potentiel, le nœud de traitement est configuré pour faire varier la première valeur interne sur la base de la valeur d'entrée du signal d'entrée reçu de la connexion à variation de potentiel.

7. Système selon l'une des revendications 1 à 6, dans lequel :
la première valeur interne varie avec le temps.

8. Système selon l'une des revendications 3,4 ou 6, dans lequel :
chacun desdits nœuds de traitement d'au moins un sous-ensemble des nœuds de traitement est configuré pour faire varier la première valeur interne à un taux qui est proportionnel à la deuxième valeur interne.

9. Système selon l'une des revendications 1 à 8, dans lequel :

chacun desdits nœuds de traitement d'au moins un sous-ensemble des nœuds de traitement comporte un premier point de connexion et un deuxième point de connexion,

lorsqu'un signal d'entrée est reçu au premier point de connexion, le nœud de traitement est configuré pour traiter ce signal d'entrée comme signal à variation de potentiel, et

lorsqu'un signal d'entrée est reçu au deuxième point de connexion, le nœud de traitement est configuré pour traiter ce signal d'entrée comme signal de modulation de courant.

10. Système selon l'une des revendications 3,4,6 ou 8 dans lequel :

la connexion d'entrée a un paramètre de retard associé,
lorsqu'un signal d'entrée est reçu de la connexion d'entrée, chacun desdits nœuds de traitement d'au moins un sous-ensemble des nœuds de traitement est configuré pour faire varier la première valeur interne ou la deuxième valeur interne après qu'un temps prédéterminé s'est écoulé, le temps prédéterminé étant basé sur le paramètre de retard.

11. Système selon la revendication 10, dans lequel le moteur de traitement de données est configuré pour recevoir des données de détection basées sur les événements.

12. Système selon la revendication 11, dans lequel :

le moteur de traitement de données est en outre configuré pour traiter des données analogiques ou continues ; et
le moteur de traitement de données comporte un module d'échantillonnage configuré pour échantillonner les données continues entrantes et les convertir en une série de pointes ayant chacune une valeur représentée par son amplitude, lesquelles pointes forment les signaux d'entrée dans les nœuds de traitement.

13. Procédé de fonctionnement d'un système selon l'une des revendications 1 à 12, le procédé comportant les étapes suivantes :

la caméra détecte les changements de luminosité d'un réseau de pixels ;
l'interface convertit les changements détectés en signaux d'événements ($e_{n} = [x_n, y_n, z_n, p_n]$) ;
le mappeur d'entrée mappe les signaux d'événements à un nœud de traitement approprié à l'intérieur du moteur de traitement de données et les y transfère ;
au niveau d'un nœud de traitement ayant une première valeur interne associée, recevoir un signal d'entrée contenant une valeur d'entrée ;
faire varier la première valeur interne du nœud de traitement en réponse au signal d'entrée ; et
lorsqu'une condition de déclenchement est remplie, émettre un signal de sortie contenant une valeur de sortie, la valeur de sortie étant basée sur une fonction de la première valeur interne, dans lequel la condition de déclenchement est soit la première valeur interne atteignant ou dépassant un seuil prédéterminé, soit le signal d'entrée comportant, en plus de la valeur d'entrée, un signal de déclenchement qui amène le nœud de traitement à émettre un signal de sortie indépendamment de la première valeur interne à ce moment-là.

Fig. 1

Fig. 2

Fig. 3

Num1

w=1, Δt=0

402

V

400

Num3

Out = Num1 > Num2

val=1

404

406

spike

Num2

w=-1, Δt=0, trig

408

Fig. 4

Num1

w=1

500

V

Temp

Out = Num1 · Num2

Num2

w=1, trig

$g_e$

V · $g_e$

w=1, trig

Num4

Out = Temp + Num3

V

502

Num3

w=1

Fig. 5

Fig. 6

Fig. 7

Fig. 8

Processing Engine

Interface converter

camera

Input Mapper   Compute nodes

Camera interface
could be
USB, MIPI, GPIO, ...

Interface to processing engine
could be
PCIe, MIPI, GPIO, ...

Data is provided as events:
$e_n = [x_n, y_n, t_n, p_n]$

Input mapper:
Maps input event to individual nodes
in the processing engine.
For example there could be a big look-up table (LUT)
that contains entries that make a correspondence
between $x_n, y_n,$ and a node

Data bus in the processing engine to
interconnect the nodes to the mapper

Fig. 9

EP 3 948 675 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017009543 A

**Non-patent literature cited in the description**

- **LICHTSTEINER P.** ; **POSCH C.** ; **DELBRUCK T.** A 128x128 120 db 15 $\mu$s latency asynchronous temporal contrast vision sensor.. *IEEE journal of solid-state circuits*, 2008, vol. 43 (2), 566-576
- **GÜTIG R.** ; **SOMPOLINSKY H.** The tempotron: a neuron that learns spike timing-based decisions. *Nature Neuroscience*, 2006, vol. 9 (3), 420-428
- **LAGORGE X.** ; **BENOSMAN R.** STICK: Spike Time Interval Computational Kernel, a framework for general purpose computing using neurons, precise timing, delays, and synchrony. *Neural Computation*, 2015, vol. 27, 2261-2317
- The Perceptron: a perceiving and recognizing automaton. **ROSENBLATT F.** Report 85-460-1. Cornell Aeronautical Laboratory, 1957
- The Leaky Integrate-and-Fire neuron: A platform for synaptic model exploration on the SpiNNaker chip'',NEURAL NETWORKS (IJCNN). **RAST A D et al.** THE 2010 INTERNATIONAL JOINT CONFERENCE ON. IEEE, 18 July 2010, 1-8
- **PAREDES-VALL FEDERICO et al.** *Unsupervised Learning of a Hierarchical Spiking Neural Network for Optical Flow Estimation: From Events to Global Motion Perception*, 28 July 2018